# EUROPÄISCHE PATENTSCHRIFT

(11) **EP 0 561 810 B1**
(45) Veröffentlichungstag und Bekanntmachung des Hinweises auf die Patenterteilung: **23.04.1997**
(21) Anmeldenummer: 91919930.7
(22) Anmeldetag: 15.11.1991
(51) Int. Cl.: F02B 51/02, H01T 13/14

(54) **ZÜNDVORRICHTUNG UND VERFAHREN ZUM HERSTELLEN EINER ZÜNDVORRICHTUNG**
IGNITION DEVICE AND PROCESS FOR MANUFACTURING IT
DISPOSITIF D'ALLUMAGE ET PROCEDE POUR LA FABRICATION D'UN DISPOSITIF D'ALLUMAGE

(30) Priorität: 10.12.1990 DE 4039323
(43) Veröffentlichungstag der Anmeldung: 29.09.1993
(73) Patentinhaber: ROBERT BOSCH GMBH, 70442 Stuttgart (DE)
(72) Erfinder: KLING, Anton, D-7016 Gerlingen 2 (DE); BARESEL, Detlef, D-7000 Stuttgart 70 (DE)
(86) Internationale Anmeldenummer: DE9100888
(87) Internationale Veröffentlichungsnummer: WO9210651

(56) Entgegenhaltungen:
- FR-A- 980 074
- US-A- 4 250 426
- US-A- 4 530 340

## Beschreibung

### Stand der Technik

Die Erfindung betrifft ein Verfahren zum Herstellen einer Zündvorrichtung entsprechend dem Oberbegriff von Anspruch 1.

Derartige Zündvorrichtungen weisen an ihrer dem Brennstoff-Luft-Gemisch ausgesetzten Oberflächen normalerweise eine Keramik in Form von Aluminiumoxid oder ein Metall auf. Diese Zündvorrichtungen sind einer erheblichen Verrußung ausgesetzt, welche die Wirkungsweise der Zündvorrichtung beeinträchtigt. Vor allem die bei einem Erststart eines Kraftfahrzeuges, d.h., beim Weg vom Fertigungsband zum Endtest des Herstellers vor der Auslieferung, auftretenden Verrußungen der Zündvorrichtung erschweren und verhindern einen zweiten Startvorgang wegen elektrischen Kurzschlusses. Dies gilt insbesondere seit der Einführung des bleifreien Benzins, wobei festgestellt wurde, daß Zündeinrichtungen bei extrem kurzen Fahrstrecken über die Maßen verrußen.

Aus der DE-OS 37 06 576.9 ist beispielsweise die Beschichtung einer Zündvorrichtung aus Stahl oder Siliziumnitrid bekannt, wobei eine aus vorgesintertem Metalloxid-Gemisch und Dicköl hergestellte Paste auf die Spitze des Keramikteils einer Zündvorrichtung aufgestrichen und eingesintert wird. In der Praxis hat sich aber erwiesen, daß die dort genannten Metalloxide die Verrußung nicht verhindern können. Ferner kam es zu einer Vielzahl von elektrischen Kurzschlüssen.

Aus der US-PS 42 50 426 ist eine Zündvorrichtung bekannt, auf deren brennraumseitige Spitze ein Vanadiumoxid in Form diskreter Teilchen oder isolierter Aggregate aufgebracht ist. Damit soll die Selbstreinigungsfähigkeit einer Zündkerze ohne Abnahme der Isolation erreicht werden. Es wird die Verwendung eines beliebigen Vanadiumoxids ohne Berücksichtigung des O-Anteils vorgeschlagen, wobei die Gefahr der Ausbildung metallisch zusammenhängender Schichten an der Oberfläche nicht vollkommen beseitigt wird und die isolierende Wirkung herabgesetzt ist.

### Vorteile der Erfindung

Gemäß der vorliegenden Erfindung wird auf den Grundkörper im Bereich der Spitze seines Keramikteils ein Metalloxid mit höheren oder höchster Metallwertigkeit oder ein Metallperchlorat oder ein anderer Sauerstoff abgebender Stoff so aufgebracht, daß bei der Herstellung oder beim Zündvorgang keine metallisch zusammenhängende Schicht entsteht. Die gewählten Stoffe besitzen dabei in einem Temperaturbereich von 200°C bis 800°C einen so hohen Sauerstoffpartialdruck oder eigenen Dampfdruck, daß sie unter den entsprechenden Bedingungen der Druck- und Temperaturverhältnisse im Zylinder entweder so viel Sauerstoff abgeben, daß der Kraftstoff an der Oberfläche des Metalloxids katalytisch-oxidativ mit Hilfe des Sauerstoffs bereits beim Entstehen oder aber mit Hilfe des dampfförmigen Stoffes selbst katalytisch-oxidativ verbrannt wird. Da dabei keine metallisch zusammenhängende Schicht gebildet wird, treten auch keine elektrischen Kurzschlüsse auf.

Bevorzugte Metalloxide sind jeweils die höherwertigen oder höchstwertigen Oxide des Chroms, Bleis, Mangans, Kobalts, Arsens, Rheniums, Osmiums, Rutheniums und Antimons.

Die Metalloxide können mit Hilfe verschiedener Verfahren auf den Grundkörper bzw. dessen Spitze bevorzugt im oberen Drittel aufgebracht werden. Hierzu zählt das Besprühen, Besputtern, Aufdampfen, Aufstreichen als Dickschichtpaste, Plasmaspritzen od. dgl..

In einem ersten Ausführungsbeispiel wurden 5 gr PbO₂ mit 0,2 ml Dicköl (Gemisch aus Benzylalkohol, Äthylzellulose und Terpineol) auf einem Dreiwalzenstuhl zu einer streichfähigen Paste angerührt. Diese Paste wurde auf die Keramikspitze einer Zündkerze aufgestrichen und bei 290° C zwei Stunden lang getempert. Danach erfolgte ein Einsetzen der Zündkerze in die Wandung eines Brennraumes, nämlich eines Motorzylinders, der bei einem Luft-Kraftstoff-Verhältnis von λ ≈ 1 betrieben wurde. Im Gegensatz zu unbeschichteten Kerzen, die deutlich stark verrußt waren, blieben die beschichteten Kerzen rußfrei.

In einem zweiten Ausführungsbeispiel wird 1 gr. PbCl.O₄ in einem Mörser an Luft verrieben. Der sich wegen der Hygroskopizität bildende Brei wird auf eine Kerzenkuppe aufgestrichen und bei 300° C innerhalb von zwei Stunden getrocknet. Danach wird die Zündkerze in einen entsprechenden Brennraum eingesetzt und den Verbrennungsprodukten ausgesetzt. Auch hier zeigt sich deutlich, daß die so beschichtete Kerze rußfrei bleibt.

## Patentansprüche

1. Zündvorrichtung wie Zündkerze, Glühkerze oder Glühvorsatz aus einem metallischen oder keramischen Grundkörper, dessen brennraumseitige Spitze beschichtet ist, dadurch gekennzeichnet, daß auf den Grundkörper im Bereich der Spitze seines Keramik-Teils jeweils höherwertiges oder höchstwertiges Oxid der Metalle Cr, Pb, Mn, Co, As, Re, Os, Ru oder Sb oder ein Metallperchlorat aufgebracht ist.

2. Zündvorrichtung nach Anspruch 1, dadurch gekennzeichnet, daß zur Beschichtung CrO₃, PbO₂, Pb₂O₃, Pb₃O₄, Mn₂O₃, Co₂O₃, Co₃O₄, As₂O₅, ReO₄, Re₂O₇, OsO₄, RuO₄, Sb₂O₅ oder Sb₂O₄ verwendet wird.

3. Zündvorrichtung nach Anspruch 1, dadurch gekennzeichnet, daß zur Beschichtung Blei-II-Perchlorat (Pb(ClO₄)₂) oder Bariumperchlorat (Ba(ClO₄)₂) verwendet wird.

4. Verfahren zur Herstellung einer Zündvorrichtung nach Anspruch 1, 2 oder 3, dadurch gekennzeichnet, daß das Aufbringen durch Besprühen, Besputtern, Aufdampfen, Aufstreichen als Dickschichtpaste oder Plasmaspritzen erfolgt.

5. Verfahren zur Herstellung einer Zündvorrichtung nach Anspruch 1 oder 3, dadurch gekennzeichnet, daß das Perchlorat zu einer 0,1 bis 20%-igen wäßrigen Lösung oder zu einem hygroskopischen Brei verarbeitet wird, mit dem dann die Zündkerzenspitze bestrichen oder getränkt und sodann bei 100-350°C getrocknet wird.

## Claims

1. Ignition device, such as a spark plug, heater plug or glow attachment, made of a metallic or ceramic base body, the combustion-chamber-side tip of which is coated, characterized in that in each case higher or highest oxide of the metals Cr, Pb, Mn, Co, As, Re, Os, Ru or Sb, or a metal perchlorate is applied to the base body, in the region of the tip of its ceramic part.

2. Ignition device according to Claim 1, characterized in that CrO₃, PbO₂, Pb₂O₃, Pb₃O₄, Mn₂O₃, Co₂O₃, Co₃O₄, As₂O₅, ReO₄, Re₂O₇, OsO₄, RuO₄, Sb₂O₅ or Sb₂O₄ is used for the coating.

3. Ignition device according to Claim 1, characterized in that lead (II) perchlorate (Pb(ClO₄)₂ or barium perchlorate (Ba(ClO₄)₂ is used for the coating.

4. Process for manufacturing an ignition device according to Claim 1, 2 or 3, characterized in that the application is carried out by spraying, sputtering, vapour deposition, brushing on as a thick-film paste or plasma spraying.

5. Process for manufacturing an ignition device according to Claim 1 or 3, characterized in that the perchlorate is processed to give a 0.1 to 20% strength aqueous solution or to give a hygroscopic slurry, with which the spark plug tip is then coated or impregnated and is then dried at 100-350°C.

## Revendications

1. Dispositif d'allumage tel que bougie d'allumage, bougie incandescente ou tête incandescente en un corps de base en céramique ou en métal, dont la pointe située du côté de la chambre de combustion est munie d'un revêtement,
caractérisé en ce que
sur le corps de base, au niveau de la pointe de sa partie céramique, on applique chaque fois un oxyde de valeur élevée ou très élevée des métaux Cr, Pb, Mn, Co, As, Re, Os, Ru, Sb ou un perchlorate du métal.

2. Dispositif d'allumage selon la revendication 1,
caractérisé en ce qu'
on utilise pour le revêtement CrO₃, PbO₂, Pb₂O₃, Pb₃O₄, Mn₂O₃, Co₂O₃, Co₃O₄, As₂O₅, ReO₄, Re₂O₇, OsO₄, RuO₄, Sb₂O₅, ou Sb₂O₄.

3. Dispositif d'allumage selon la revendication 1,
caractérisé en ce que
pour le revêtement on utilise du perchlorate de plomb II (Pb(ClO₄)₂) ou du perchlorate de baryum (Ba(ClO₄)₂).

4. Procédé de fabrication d'un dispositif d'allumage selon la revendication 1, 2 ou 3,
caractérisé en ce que
l'application se fait par pulvérisation, par projection, par dépôt à la vapeur, par application comme revêtement, d'une couche de pâte épaisse ou par pulvérisation au plasma.

5. Procédé de fabrication d'un dispositif d'allumage selon la revendication 1 ou 3,
caractérisé en ce qu'
on traite le perchlorate pour former une solution aqueuse à 0,1 jusqu'à 20 % ou une boue hygroscopique puis on en revêt ou on en imprègne la pointe de la bougie puis on sèche à une température comprise entre 100 et 350°C.
